# EUROPEAN PATENT SPECIFICATION

(11) **EP 3 031 037 B1**
(45) Date of publication and mention of the grant of the patent: **25.10.2017**
(21) Application number: 14777883.1
(22) Date of filing: 05.08.2014
(51) Int. Cl.: G07F 11/04, G07F 11/16, G07F 11/26

(54) **AUTOMATIC WAREHOUSE**
AUTOMATISCHES LAGER
ENTREPÔT AUTOMATIQUE

(30) Priority: 09.08.2013 IT VI20130214
(43) Date of publication of application: 15.06.2016
(73) Proprietor: Wib S.r.l, 90128 Palermo (IT)
(72) Inventor: LO IACONO, Antonino, 90128 Palermo (IT); MONTAGNINO, Fabio Maria, 90128 Palermo (IT); PAREDES, Filippo, 90128 Palermo (IT)
(74) Representative: Burchielli, Riccardo
(86) International application number: PCT/IT2014/000206
(87) International publication number: WO 2015/019378

(56) References cited:
- EP-A1- 1 699 022
- EP-A1- 2 143 667
- EP-A1- 2 568 451
- EP-A1- 2 568 452
- EP-A2- 1 993 078
- WO-A1-2007/009714
- WO-A1-2012/094423
- WO-A1-2012/146816
- DE-U1-202007 018 223
- JP-A- 2000 113 311
- JP-A- 2002 092 725
- JP-A- 2005 165 641
- US-A1- 2012 285 980

## Description

The present invention relates to an automated store.

In particular, this automated store is intended to be used for the storage and distribution of edible products and especially of foodstuffs.

Therefore the present invention belongs to the field of automated stores of the type known as vending machines.

Nowadays, a automated store is equipped with an internal compartment suitable for storing products and an apparatus for loading and managing such products.

This compartment comprises a storage portion, which presents a shelves array.

Each shelf of the array has a plurality of lanes disposed side by side, which are suitable to accommodate products in rows.

Each lane includes:
- a conveyor belt which supports products in a row and configured to transport them along the lane and
- an displacing device for operating the conveyor which comprises first gears by means of which the conveyor can be operated, that first gears protruding from one end of the conveyor belt itself.

The compartment further comprises a dispensing portion.

The apparatus for loading and managing comprises a loading and unloading device suitable to load or unload the products from the shelves and a distribution device that has a discharge portion and is operable to select a product housed in the storage compartment and to manage the unloading of such product into the discharge portion.

The loading and unloading device is operatively connected to the distribution device to be controlled and, structurally, has a shelf suitable for supporting products for transporting the latters from the shelves to the discharge portion.

Furthermore, the loading and unloading device is equipped with motorized second gears adapted to mesh with thefirst gears of the displacing devices, for operating the conveyor belt.

The loading and unloading device is vertically movable, to be faced to a default shelf, and horizontally to be positioned in front of a chosen lane, with the second gears facing the first gears so that the former can be meshed with the latter.

When operated by the user, the distribution device controls the loading and unloading device which moves vertically and/or horizontally to the selected lane containing the products to unload.

Then the second gear of the loading and unloading device meshes with the first gear and actuates the conveyor for unloading a select number of products from the lane to the loading and unloading device shelf. Subsequently, the loading and unloading device moves to the discharge portion where it discharges the products from its shelf.

A drawback of this traditional automated store is the structural complexity and that it is slow to storage a plurality of products to be stored or to supply a plurality of products to be taken from different lanes.

An automated store having the technical features of the preamble of the appended claim 1 is known for example from EP A 2568451 and from EP A 2767958.

The problem underlying the present invention is to simplify the structure of the aforementioned automated stores.

Main task of the present invention consists in realizing an automated store which puts solution to this problem by solving the drawbacks of the above-described automated stores.

Within this aim, it is an object of the present invention to propose an automated store which is structurally simpler than the traditional ones. Another object of the invention is to reduce the number of devices for actuating employed compared to traditional automated stores.

Another object of the present invention is to provide an automated store that allows to store and distribute the products faster than the known automated stores.

Another object of the invention is to propose an automated store whose capacity can be easily modified.

This aim and these and other objects that will become better clear hereinafter are achieved by the vending machine according to claim 1. Details characteristics of the vending machine are disclosed in claims 2-9. Further characteristics and advantages of the invention will become clear from the description of a preferred embodimentof the automatic store according to the invention, disclosed by way of non-limitative example only in the accompanying drawings, in which:

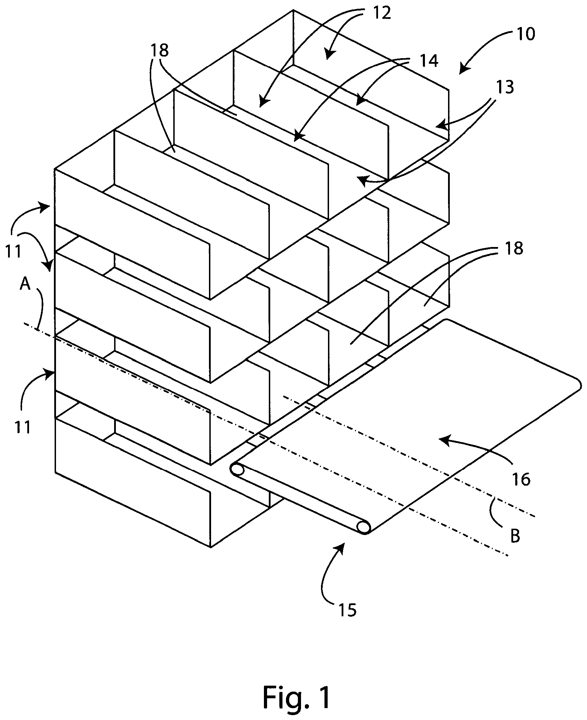

- Figure 1 is shows a simplified diagram of an automated store according to the invention, in perspective view;

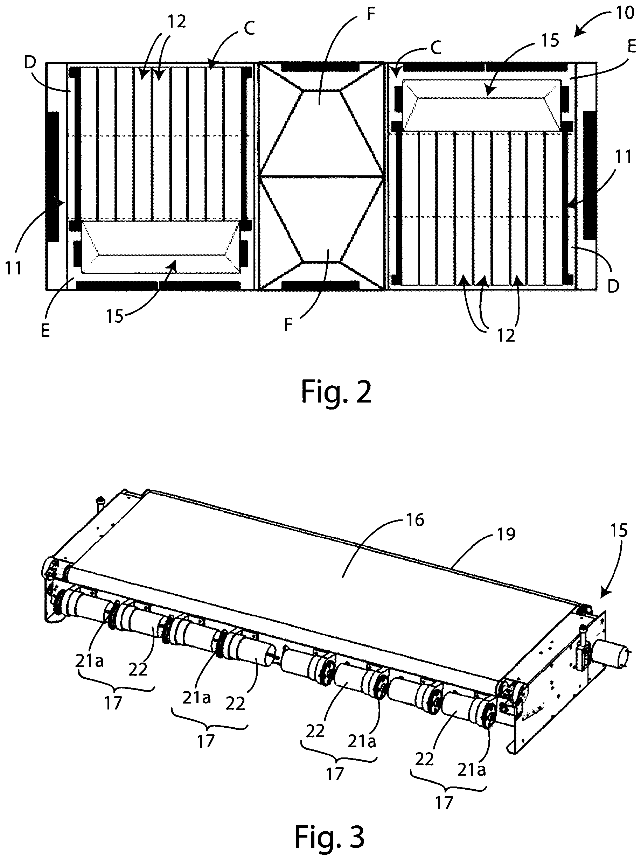

- Figure 2 shows a schematic plan view of the automated store according to the invention;
- Figure 3 shows a component of the loading and unloading device of an automated store according to the invention;
- Figure 4 shows some components of an automated store according to the invention, relating to a loading and unloading device and to a shelf;
- Figures 5a and 5b show a detail of an automated store according to the invention enlarged and seen in side elevation, in two operating configurations.

With particular reference to the above mentioned drawings, it is globally indicated with the reference number 10 an automated store particularly suited for the storage and distribution of consumables such as packaged food products.

Structurally, the automated store 10 comprises a plurality of shelves 11 each comprising a plurality of lanes 12 adapted to accommodate the products and equipped with an opening 13 for the loading and unloading of the products.

Each lane 12 comprises a displacing device 14 for moving the products along the lane 12 with respect to the opening 13.

According to the invention, the automated store 10 has a particular feature in that it comprises a loading and unloading device 15 movable selectively to one of the shelves 11 and equipped with a shelf 16 configured to be stand simultaneously by the openings 13 of all the lanes 12 of this shelf 11.

The loading and unloading device 15 is provided with a plurality of actuating devices 17, independent from each other and adapted to be independently operated.

Each of the actuating devices 17 is configured to be coupled to a corresponding displacing device 14 of a preset one o the lanes 12.

Each actuating devices 17 is configured to actuate a respective displacing device 14 for transferring products from/to the shelf 16 to/from the preset lane 12.

For example, both the actuating devices 17 and the displacing device 14 may be advantageously provided with corresponding toothed wheels adapted to mesh each other.

Preferably, at least a toothed wheel of the actuating devices 17 and/or at least one toothed wheel of the displacing device 14 are movable to be moved from/to an operating configuration, in they mesh, to a rest position in which they are spaced apart and not meshed.

Advantageously, the shelves 11 are stacked vertically and the loading and unloading device 15 is vertically movable to be flanked selectively to one of the shelves 11.

In more detail, the loading and unloading device 15 can be slidably connected to guides or rails and to motor means for moving it along such guides or rails, the latters following the arrangement of the shelves 11 which, preferably, extends vertically.

The displacing device 14 of each lane 12 advantageously comprises a first conveyor belt 18 adapted to move products along the lanes 12 and to receive and unload such products through the opening 13 of the lanes 12. The shelf 16 of the loading and unloading device 15 advantageously comprises at least a second conveyor belt 19 configured to displace products that are resting on the shelf 16 itself.

In a first embodiment of the invention, illustrated by way of non limiting example in the accompanying drawings, the first conveyor belt 18 sets a first movement direction A for the products and the second conveyor belt 19 defines a second movement direction B for the products, which is perpendicular to the first movement direction A.

In a second embodiment of the present invention, not illustrated in the attached drawings, the first conveyor belt defines a first movement direction for the products and the second conveyor belt defines a second movement direction for the products which is parallel to the first movement direction.

In a third embodiment of the invention, not illustrated in the accompanying figures, the first conveyor belt defines a first movement direction and the shelf of the loading and unloading device preferably comprises:
- at least a second conveyor belt and
- at least a third conveyor belt,
wherein the second and the third conveyor belt are configured to move products resting on the shelf, the second conveyor belt defining a second movement direction for the products and the third conveyor defining a third movement direction for the products which is perpendicular to the second movement direction that is parallel to the first movement direction.

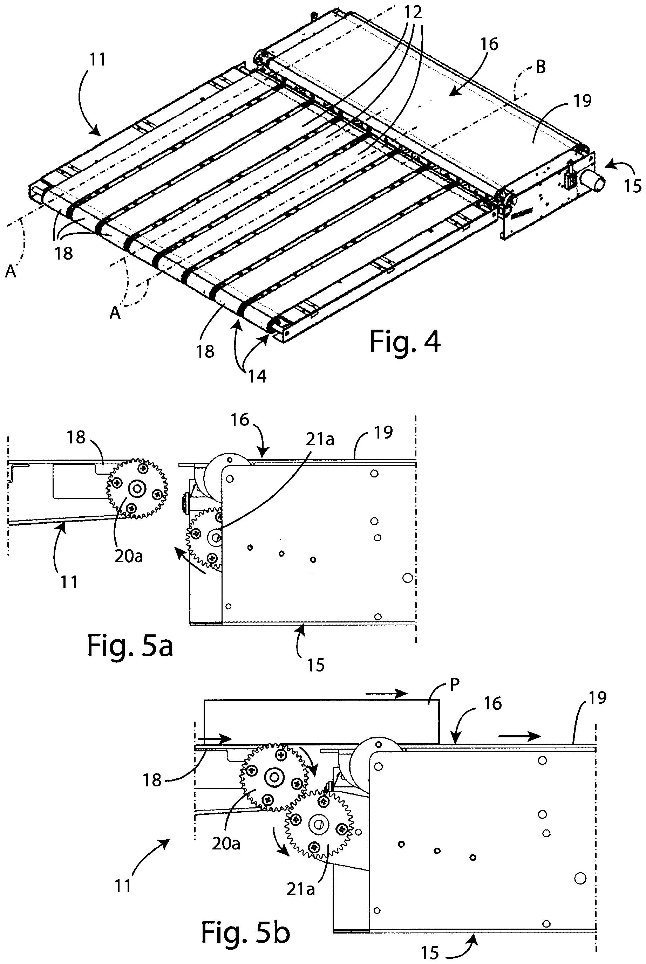

Preferably, the displacing devices 14 of the lanes 12 comprise a first coupling element 20, which preferably comprises a first toothed wheel 20a, the actuating devices 17 comprising a second coupling element 21 which preferably includes a second toothed wheel 21a, coupled to the first coupling element 20 and extensible from the loading and unloading device 15 for coupling to the first coupling element 20, for example as shown in Figure 5b.

Each actuating devices 17 of the loading and unloading device 15 comprises a motor 22 connected to the second coupling element 21 to operate the latter.

Advantageously, the automated store 10 is provided with an internal compartment C comprising:
- a storage compartment D in which are contained the shelves 11,
- a handling compartment E in which loading and unloading device 15 is housed, and
- a discharge portion F accessible from the outside of the automated store 10 and put in communication with the handling compartment E.

The loading and unloading device 15 is advantageously configured to move products from/to the shelves 11 to/from the discharge portion F. The automated store 10 preferably comprises:
- motor means, not shown, connected to the loading and unloading device 15 and adapted to move the latter for flanking it to a particular shelf 11;
- a control apparatus, not illustrated, operable by a user, to select at least one product to be unloaded from the shelves 11, the control apparatus being connected to the motor means and to the loading and unloading device for command the latters.

The control apparatus is adapted to control the motor means, for displacing loading and unloading device 15 with respect to the shelves and is also adapted to control at least one actuating devices 17 to actuate the transfer of products between the lanes 12 and the shelf 16.

Functionally, the automated store 10 is configured to operate as follows.

The user selects one or more products to be removed from the automatic store 10 and subsequently issues a command accordingly to the control apparatus, preferably via an interface which advantageously is part of the control apparatus itself.

The control apparatus move the loading and unloading device 15 to the portion of the shelf (or of the shelves) which houses (or house) the products selected to be unloaded.

When the loading and unloading device 15 has the shelf 16 aligned with the selected shelf from which products are to be unloaded, the control apparatus can operate in parallel a plurality of actuating devices 17 for actuating the respective displacing devices 14 and thus for controlling the simultaneous or sequential collection on the shelf 16 of a corresponding plurality of products P.

In fact, a plurality of products P can be transferred simultaneously from/to the shelf 16 to/from different lanes 12.

In figure 5b arrows represent, by way of non-limiting example, the movements of the displacing device 14 and of an actuating devices 17 during the transfer of a product P from a lane 12 of a shelf 11 and the shelf 16.

An automated store 10, according to the invention provides a particular advantage in allowing to selectively, independently and simultaneously unload on the loading and unloading device a plurality of products from different lanes, making it dramatically faster and more efficient the unloading of products compared to traditional vending machines.

The invention thus conceived is susceptible of numerous modifications and variations, all within the scope of protection of the appended claims. Moreover, all the details may be replaced with other technically equivalent elements.

In practice, the materials employed, as well as the contingent shapes and dimensions, may be varied depending on the contingent requirements and the state of the technique.

Where the construction characteristics and techniques mentioned in the following claims are followed by reference numbers or signs, these signs or reference numbers have been affixed with the sole purpose of increasing the intelligibility of the claims themselves and, consequently, they do not constitute in any way limiting the interpretation of each element identified by way of example only, by such signs or reference numbers.

The invention as it is conceived is susceptible to numerous modifications and variants, all falling within the scope of the appended claims. Furthermore all the details can be replaced by technically equivalent elements.

In practice, the materials used, as well as the contingent shapes and dimensions, can be varied according to the contingent requirements and the state of the art.

Where the construction characteristics and techniques mentioned in the subsequent claims are followed by signs or reference numbers, such signs or reference numbers have been used for the sole aim of increasing the intelligibility of the claims themselves and, therefore, they do not in any way constitute a limitation to the interpretation of each element which is identified, purely by way of example, by such signs or reference numbers.

## Claims

1. Vending machine (10) for edible products comprising a plurality of shelves (11) each comprising a plurality of lanes (12) which are adapted to accommodate products and are equipped with an opening (13) for loading and unloading products, each lane (12) comprising a displacing device (14) for moving the products along said lane (12) with respect to said opening (13), said vending machine (10) comprising a loading and unloading device (15), operable to be flanked selectively to one of said shelves (11), and that is equipped with a shelf (16) configured to be flanked simultaneously to the openings (13) of all the lanes (12) of said shelf (11), said loading and unloading device (15) being provided with a plurality of actuating devices (17), independent from each other, each of said actuating devices (17) being adapted to be coupled to a corresponding of said displacing device (14) of a selected one of said lanes (12) and being configured to actuate said displacing device (14), to transfer products from/to said shelf (16) to/from said selected lane (12);
the vending machine (10) further comprising:
- motor means connected to said loading and unloading device (15) and adapted to move the latter so as to selectively be flanked to a selected one of said shelves (11);
- a control apparatus operable by a user to select at least one product to be unloaded from said shelves (11), said control apparatus being connected to the motor means and to said loading and unloading device;
wherein the control apparatus is configured for operating in parallel a plurality of said actuating devices (17) for actuating the respective displacing devices (14) and thus operating the simultaneous or sequential collection on the shelf (16) of a corresponding plurality of products (P) to selectively, independently and simultaneously unload on the loading and unloading device (15) a plurality of products (P) from different lanes (12).

2. Vending machine according to claim 1 **characterized in that** said shelves (11) are stacked vertically, and that said loading and unloading device (15) is movable vertically to be selectively flanked to one of said shelves (11).

3. Vending machine according to one of the preceding claims **characterized in that** the displacing device (14) of said lanes (12) comprises a first conveyor belt (18) adapted to move products along said lanes (12) and to receive and unload them through the opening (13) of said lanes (12).

4. Vending machine (10) according to one of the preceding claims **characterized in that** the shelf (16) of said loading and unloading device (15) comprises at least a second conveyor belt (19) configured to move products which rest on said shelf (16).

5. Vending machine (10) according to claims 3 and 4, **characterized in that** said first conveyor belt defining a first movement direction for products and said second conveyor belt defines a second movement direction of the products which is parallel to said first movement direction.

6. Vending machine (10) according to claims 3 and 4, **characterized in that** said first conveyor belt (18) defines a first movement direction (A) for products and said second conveyor belt (19) defines a second movement direction (B) for the products, the second movement direction (B) being perpendicular to said first movement direction (A).

7. Vending machine (10) according to claim 3 **characterized in that** said first conveyor belt defines a first movement direction for products and the shelf of said loading and unloading device includes:
- at least a second conveyor belt and
- at least a third conveyor belt,
Which are configured to move product resting on said shelf, said second conveyor belt defining a second movement direction for products and said third conveyor defining a third movement direction for the products the third movement direction being perpendicular to said second movement direction.

8. Vending machine (10) according to one of the preceding claims **characterized in that** the displacing device (14) of said lanes (12) comprise a first coupling element (20) said actuating devices (17) comprising a second coupling element (21), suitable to be coupled to the first coupling element (20) and extendable from said loading and unloading device (15) for coupling to said first coupling element (20).

9. Vending machine (10) according to claim 8 **characterized in that** each actuating device (17) of said loading and unloading device (15) comprises a motor (22) connected to said second coupling element (21) to operate it.

## Patentansprüche

1. Verkaufsautomat (10) für genießbare Produkte umfassend eine Vielzahl von Ablagen (11), die jeweils eine Vielzahl von Bahnen (12) umfassen, die eingerichtet sind, um Produkte aufzunehmen und mit einer Öffnung (13) zum Beladen und Entladen von Produkten ausgestattet sind, wobei jede Bahn (12) eine Verschiebeeinrichtung (14) zum Bewegen der Produkte entlang der Bahn (12) in Bezug zu der Öffnung (13) umfasst, wobei der Verkaufsautomat (10) eine Belade- und Entladevorrichtung (15) umfasst, die betreibbar ist, um eine der Ablagen (11) selektiv zu flankieren, und die mit einer Ablage (16) ausgestattet ist, die so konfiguriert ist, dass es gleichzeitig die Öffnungen (13) aller Bahnen (12) der Ablage (11) flankiert, wobei die Belade- und Entladevorrichtung (15), die mit einer Vielzahl von Betätigungsvorrichtungen (17) versehen ist, die voneinander unabhängig sind, wobei jede der Betätigungsvorrichtungen (17) eingerichtet ist, um mit einer entsprechenden der Verschiebeeinrichtung (14) einer der ausgewählten Bahnen (12) verbunden zu sein und so konfiguriert ist, dass sie die Verschiebeeinrichtung (14) betätigt, um Produkte von/zu der Ablage (16) zu/von der ausgewählten Bahn (12) zu übertragen;
wobei der Verkaufsautomat (10) ferner aufweist:
- eine Motoreinrichtung, die mit der Belade- und Entladevorrichtung (15) verbunden ist und dazu eingerichtet ist, um das Letztere zu bewegen, so dass es selektiv eine der ausgewählten Ablagen (11) flankiert;
- eine Steuervorrichtung, die von einem Benutzer betätigbar ist, um mindestens ein zu entladendes Produkt aus den Ablagen (11) auszuwählen, wobei die Steuervorrichtung mit der Motoreinrichtung und der Belade- und Entladevorrichtung verbunden ist;
wobei die Steuervorrichtung zum parallelen Betreiben mehrerer Betätigungsvorrichtungen (17) zur Betätigung der jeweiligen Verschiebevorrichtungen (14) konfiguriert ist und die somit die gleichzeitigen oder sequentiellen Sammlungen einer entsprechenden Vielzahl von Produkten (P) auf der Ablage (16) handhabt, um selektiv, unabhängig und gleichzeitig mehrere Produkten (P) aus verschiedenen Bahnen (12) auf die Belade- und Entladevorrichtung (15) zu entladen.

2. Verkaufsautomat nach Anspruch 1, **dadurch gekennzeichnet, dass** die Ablagen (11) vertikal gestapelt sind, und dass die Belade- und Entladevorrichtung (15) vertikal bewegbar ist, um selektiv zu einer der Ablagen (11) flankiert zu werden.

3. Verkaufsautomat nach einem der vorstehenden Ansprüche, **dadurch gekennzeichnet, dass** die Verschiebeeinrichtung (14) der Bahnen (12) ein erstes Förderband (18) umfasst, das dazu eingerichtet ist, Produkte entlang der Bahnen (12) zu bewegen und zu empfangen und sie durch die Öffnung (13) der Bahnen (12) zu entladen.

4. Verkaufsautomat (10) nach einem der vorstehenden Ansprüche, **dadurch gekennzeichnet, dass** die Ablage (16) der Belade- und Entladevorrichtung (15) mindestens ein zweites Förderband (19) umfasst, das zum Bewegen von auf der Ablage (16) ruhenden Produkten konfiguriert ist.

5. Verkaufsautomat (10) nach Anspruch 3 und 4, **dadurch gekennzeichnet, dass** das erste Förderband eine erste Bewegungsrichtung für Produkte definiert und das zweite Förderband eine zweite Bewegungsrichtung der Produkte definiert, die parallel zu der ersten Bewegungsrichtung ist.

6. Verkaufsautomat (10) nach Anspruch 3 und 4, **dadurch gekennzeichnet, dass** das erste Förderband (18) eine erste Bewegungsrichtung (A) für die Produkte definiert und das zweite Förderband (19) eine zweite Bewegungsrichtung (B) für die Produkte definiert, wobei die zweite Bewegungsrichtung (B) senkrecht zu der ersten Bewegungsrichtung (A) ist.

7. Verkaufsautomat (10) nach Anspruch 3, **dadurch gekennzeichnet, dass** das erste Förderband eine erste Bewegungsrichtung für Produkte definiert und die Ablage der Belade- und Entladevorrichtung umfasst:
- mindestens ein zweites Förderband und
- mindestens einen dritten Förderer,
die so konfiguriert sind, dass sie ein Produkt bewegen, das auf der Ablage ruht, wobei das zweite Förderband eine zweite Bewegungsrichtung für Produkte definiert und der dritte Förderer eine dritte Bewegungsrichtung für die Produkte definiert, wobei die dritte Bewegungsrichtung senkrecht zu der zweiten Bewegungsrichtung ist.

8. Verkaufsautomat (10) nach einem der vorstehenden Ansprüche, **dadurch gekennzeichnet, dass** die Verschiebeeinrichtung (14) der Bahnen (12) ein erstes Kupplungselement (20) umfasst, wobei die Betätigungseinrichtungen (17) ein zweites Kupplungselement (21) umfassen, das geeignet ist, um mit dem ersten Kupplungselement (20) gekoppelt zu werden und das erstreckbar von der Belade- und Entladevorrichtung (15) aus ist, um mit dem ersten Kupplungselement (20) verbunden zu werden.

9. Verkaufsautomat (10) nach Anspruch 8, **dadurch gekennzeichnet, dass** jede Betätigungseinrichtung (17) der Belade- und Entladevorrichtung (15) einen mit dem zweiten Kupplungselement (21) verbundenen Motor (22) umfasst, um ihn zu betätigen.

## Revendications

1. Machine de distribution (10) pour des produits comestibles comprenant une pluralité d'étagères (11) comprenant chacune une pluralité de files (12) qui sont adaptées pour contenir des produits et sont équipées d'une ouverture (13) pour charger et décharger des produits, chaque file (12) comprenant un dispositif d'entraînement (14) pour déplacer les produits le long de ladite file (12) par rapport à ladite ouverture (13), ladite machine de distribution (10) comprenant un dispositif de chargement et de déchargement (15), utilisable pour être contigu de manière sélective à l'une desdites étagères (11) et qui est équipé d'une étagère (16) configurée pour être contigüe simultanément aux ouvertures (13) de toutes les files (12) de ladite étagère (11), ledit dispositif de chargement et de déchargement (15) étant pourvu d'une pluralité de dispositifs d'actionnement (17), indépendant les uns des autres, chacun desdits dispositifs d'actionnement (17) étant adapté pour être couplé à l'un correspondant dudit dispositif d'entraînement (14) de l'une sélectionnée desdites files (12) et étant configuré pour actionner ledit dispositif d'entraînement (14) pour transférer des produits de/vers ladite étagère (16) vers/depuis ladite file sélectionnée (12) ;
la machine de distribution (10) comprenant en outre :
- un moyen motorisé connecté audit dispositif de chargement et de déchargement (15) et adapté pour déplacer ce dernier de sorte qu'il soit contigu de manière sélective à l'une desdites étagères (11) ;
- un appareil de commande utilisable par un utilisateur pour sélectionner au moins un produit à décharger desdites étagères (11), ledit appareil de commande étant connecté au moyen motorisé et audit dispositif de chargement et de déchargement ;
dans laquelle l'appareil de commande est configuré pour faire fonctionner en parallèle une pluralité desdits dispositifs d'actionnement (17) pour actionner les dispositifs d'entraînement (14) respectifs et ainsi pour faire fonctionner la collecte simultanée ou séquentielle sur l'étagère (16) d'une pluralité correspondante de produits (P) pour décharger de manière sélective, indépendante et simultanée sur le dispositif de chargement et de déchargement (15) une pluralité de produits (P) depuis différentes files (12).

2. Machine de distribution selon la revendication 1, **caractérisée en ce que** lesdites étagères (11) sont empilées verticalement et **en ce que** ledit dispositif de chargement et de déchargement (15) est mobile verticalement pour être sélectivement contigu à l'une desdites étagères (11).

3. Machine de distribution selon l'une quelconque des revendications précédentes, **caractérisée en ce que** le dispositif d'entraînement (14) desdites files (12) comprend une première bande transporteuse (18) adaptée pour déplacer des produits le long desdites files (12) et pour les recevoir et décharger à travers l'ouverture (13) desdites files (12).

4. Machine de distribution (10) selon l'une quelconque des revendications précédentes, **caractérisée en ce que** l'étagère (16) dudit dispositif de chargement et de déchargement (15) comprend au moins une deuxième bande transporteuse (19) configurée pour déplacer des produits qui restent sur ladite étagère (16).

5. Machine de distribution (10) selon les revendications 3 et 4, **caractérisée en ce que** ladite première bande transporteuse définit une première direction de déplacement pour des produits et ladite deuxième bande transporteuse définit une deuxième direction de déplacement des produits qui est parallèle à ladite première direction de déplacement.

6. Machine de distribution (10) selon les revendications 3 et 4, **caractérisée en ce que** ladite première bande transporteuse (18) définit une première direction de déplacement (A) pour des produits et ladite deuxième bande transporteuse (19) définit une deuxième direction de déplacement (B) pour les produits, la deuxième direction de déplacement (B) étant perpendiculaire à ladite première direction de déplacement (A).

7. Machine de distribution (10) selon la revendication 3, **caractérisée en ce que** ladite première bande transporteuse définit une première direction de déplacement pour des produits et l'étagère dudit dispositif de chargement et de déchargement inclut :
- au moins une deuxième bande transporteuse et
- au moins une troisième bande transporteuse,
qui sont configurées pour déplacer un produit restant sur ladite étagère, ladite deuxième bande transporteuse définissant une deuxième direction de déplacement pour des produits et ladite troisième bande transporteuse définissant une troisième direction de déplacement pour les produits, la troisième direction de déplacement étant perpendiculaire à ladite deuxième direction de déplacement.

8. Machine de distribution (10) selon l'une quelconque des revendications précédentes, **caractérisée en ce que** le dispositif d'entraînement (14) desdites files (12) comprend un premier élément de couplage (20), lesdits dispositifs d'actionnement (17) comprenant un second élément de couplage (21), approprié pour être couplé au premier élément de couplage (20) et extensible depuis ledit dispositif de chargement et de déchargement (15) pour se coupler audit premier élément de couplage (20).

9. Machine de distribution (10) selon la revendication 8, **caractérisée en ce que** chaque dispositif d'actionnement (17) dudit dispositif de chargement et de déchargement (15) comprend un moteur (22) connecté audit second élément de couplage (21) pour le faire fonctionner.
